# FASCICULE DE BREVET EUROPEEN

(11) **EP 1 794 621 B1**
(45) Date de publication et mention de la délivrance du brevet: **16.04.2008**
(21) Numéro de dépôt: 05821616.9
(22) Date de dépôt: 29.09.2005
(51) Int. Cl.: G01S 17/93

(54) **SYSTEME D'ALERTE ANTICOLLISION POUR VEHICULE MARIN ET PROCEDE D'ANALYSE ANTICOLLISION**
KOLLISIONSSCHUTZWARNSYSTEM FÜR WASSERFAHRZEUGE UND KOLLISIONSSCHUTZANALYSEVERFAHREN
ANTI-COLLISION WARNING SYSTEM FOR MARINE VEHICLES AND ANTI-COLLISION ANALYSIS METHOD

(30) Priorité: 29.09.2004 FR 0452186
(43) Date de publication de la demande: 13.06.2007
(73) Titulaire: Sea On Line, 92410 Ville d'Avray (FR)
(72) Inventeur: WAQUET, Philippe, 92410 Ville d'Avray (FR)
(74) Mandataire: Marchand, André
(86) Numéro de dépôt international: PCT/IB2005/002903
(87) Numéro de publication internationale: WO 2006/035305

(56) Documents cités:
- EP-A- 1 424 567
- DE-A1- 10 244 641
- GB-A- 785 340
- US-A- 3 150 364
- US-A- 3 820 068
- US-A- 4 290 043
- US-A- 4 623 966
- US-A- 5 790 183
- US-A1- 2001 035 946
- US-A1- 2002 126 024
- US-A1- 2004 022 416
- US-A1- 2004 183 941
- US-B1- 6 400 830
- JOHN G. WEBSTER (EDITOR): "Wiley Encyclopedia of Electrical and Electronics Engineering , Vol. 9" 1999, JOHN WILLEY & SONS , INC. , XP002388711 p. 586, par. "Grey-Level-Thresholding"

## Description

### Domaine technique

L'invention concerne un système d'alerte anticollision pour véhicule marin et un procédé d'analyse anticollision par traitement d'images provenant d'un capteur optique omnidirectionnel installé à bord d'un véhicule marin.

L'invention s'applique notamment mais non exclusivement, aux navires ainsi qu'aux drones navals.

### Etat de la technique antérieure

Dans la suite de la description le véhicule marin considéré à titre d'exemple est un navire.

Le risque de collision qui est mal maîtrisé en mer, provient en grande partie d'une insuffisance des moyens de veille optique. Dans le domaine du transport maritime, il se produit en moyenne 600 collisions par an. Les conséquences de ces collisions sont souvent graves pour l'environnement lorsqu'elles mettent en cause des pétroliers ou des chimiquiers.

Dans le domaine du transport maritime de passagers, les navires (ferry, rouliers, ...) ont une vulnérabilité élevée.

Dans le domaine de la pêche, il se produit environ 3000 collisions par an. Le nombre de victimes est élevé en raison des faibles dimensions des navires.

Dans le domaine de la plaisance, les collisions sont également assez fréquentes.

Les collisions en mer résultent principalement d'un défaut de veille. Une défaillance humaine est à l'origine de 70 à 90% des accidents, soit par vigilance insuffisante, ou négligence du personnel de quart, soit par routine et fausse appréciation du risque. Le manque de vigilance est souvent constaté lorsque le navire se trouve en situation "prioritaire", dans des conditions de bonne visibilité. Les accidents peuvent aussi résulter d'un manque de qualification, une méconnaissance des règles, voire d'une totale incompétence du personnel de quart. Il est également fréquent que l'effectif du personnel de quart soit insuffisant en raison d'une réduction des équipages (manoeuvres, entretien, activités commerciales, ... ), avec pour conséquence une surcharge de travail et donc une fatigue accrue du personnel de quart. Ces accidents peuvent également résulter d'une mauvaise utilisation du système radar.

A l'heure actuelle, la plupart des navires commerciaux disposent en tant qu'équipement anticollision d'un système radar. Ce système fournit une information précise et fiable, mais nécessite d'appliquer rigoureusement une procédure de réglage pour être utilisable efficacement en tant que système anticollision. Or cette procédure est souvent mal appliquée.

Il existe également des systèmes de type ARPA ("Automatic Radar Plotting Aid") qui analysent les signaux fournis par un radar. Ces systèmes présentent un taux de fausses alarmes élevé. Il en résulte que le dispositif d'alarme associé au système est fréquemment mis à l'arrêt.

On a également mis au point un système d'identification automatique AIS ("Automatic Identification System") qui doit équiper tous les navires à risque élevé (transport de passagers, transports de marchandises dangereuses) à partir de 2010. Ce système s'avère très efficace lorsqu'il est associé à un système de positionnement précis tel qu'un système GPS ("Global Positioning System"). Toutefois, le système AIS ne prend pas en compte la circulation des navires, beaucoup plus nombreux, qui ne sont pas équipés de ce système.

Aujourd'hui, seul le radar est vraiment pris en compte pour traiter le risque de collision. Cet équipement présente une insuffisance de redondance.

L'invention a pour objet de pallier ces inconvénients en proposant un système d'alerte anticollision entièrement automatisé et un procédé d'analyse anticollision.

### Exposé de l'invention

L'invention concerne un système d'alerte anticollision installé à bord d'un véhicule marin comprenant :
- au moins un capteur optique couvrant au moins partiellement l'horizon du véhicule marin, et fournissant des images,
- des moyens de traitement d'image pour rechercher en temps réel dans chaque image fournie par le capteur optique des groupes de pixels adjacents en fonction de l'intensité lumineuse de chaque pixel de l'image, pour évaluer en temps réel la persistance de chaque groupe de pixels dans des images successives, pour déterminer en temps réel des groupes constituant des objets visibles sur la surface de la mer, en fonction de leur persistance, et pour déterminer en temps réel des informations de position et de dimension d'au moins l'un des objets visibles,
- des moyens d'analyse anticollision, pour calculer périodiquement l'évolution des informations de position et de dimension de l'objet visible, et pour évaluer un risque de collision du véhicule marin avec l'objet visible en fonction de l'évolution des informations de position et de dimension de l'objet visible.

Selon un mode de réalisation de l'invention, le capteur optique comprend au moins une caméra fixe par rapport au véhicule marin et couvre au moins une partie substantielle de l'horizon en permanence.

Selon un mode de réalisation de l'invention, le capteur optique comprend au moins une caméra dont le champ optique est orientable pour couvrir l'horizon par rotation.

Selon un mode de réalisation de l'invention, le capteur optique comprend :
- une caméra comportant un objectif ayant un axe optique orienté sensiblement verticalement,
- un ensemble tournant mû par un moteur et portant un miroir disposé dans le champ optique de l'objectif et orienté sensiblement à 45° par rapport à l'axe optique de l'objectif, et
- un dispositif de mesure de la position angulaire de l'ensemble tournant.

Selon un mode de réalisation de l'invention, le système comprend :
- un boîtier constitué par un socle servant de support, et
- une cuve stabilisée montée sur un dispositif de stabilisation, et servant de support au capteur optique.

Selon un mode de réalisation de l'invention, le dispositif de stabilisation comprend une suspension à la cardan et un volant gyroscopique.

Selon un mode de réalisation de l'invention, le capteur comprend une caméra mono-ligne entraînée en rotation autour d'un axe vertical.

Selon un mode de réalisation de l'invention, le système comprend :
- un boîtier,
- un ensemble tournant tenu dans le boîtier et mû par un moteur à axe vertical,
- un capot de protection de l'ensemble tournant muni d'une ouverture,
- une caméra numérique fixée à l'ensemble tournant, et comprenant un senseur mono-ligne,
- un objectif dont l'axe optique est apte à balayer l'horizon par rotation de l'ensemble tournant.

Selon un mode de réalisation de l'invention, le capteur comprend une vitre de protection ventilée à l'aide d'un ventilateur d'extraction pour protéger l'objectif.

Selon un mode de réalisation de l'invention, des cartes électroniques de traitement d'image sont solidaires de l'ensemble tournant.

Selon un mode de réalisation de l'invention, le système comprend un dispositif de mesure de la position angulaire de l'ensemble tournant.

Selon un mode de réalisation de l'invention, les données numériques de sortie du capteur optique sont transmises par l'intermédiaire de contacts tournants qui assurent également le contact de l'alimentation des organes de l'ensemble tournant.

Selon un mode de réalisation de l'invention, le système comprend des moyens d'interface avec un compas.

Selon un mode de réalisation de l'invention, le système comprend des moyens d'interface avec d'autres capteurs et des moyens d'analyse effectuant une analyse de cohérence avec des informations fournies par les autres capteurs.

Selon un mode de réalisation de l'invention, le système comprend des moyens de signalisation pour signaler qu'un objet dangereux est détecté.

Selon un mode de réalisation de l'invention, les informations de position de chaque objet visible comprennent un azimut de l'objet.

L'invention concerne également un procédé d'alerte anticollision dans un système d'alerte anticollision pour véhicule marin comprenant au moins un capteur optique couvrant au moins partiellement l'horizon du véhicule marin. Selon l'invention, le procédé comprend des étapes consistant à :
- acquérir du capteur optique des images incluant une partie de l'horizon du véhicule marin,
- rechercher en temps réel dans chaque image acquise des groupes de pixels adjacents en fonction de l'intensité lumineuse de chaque pixel de l'image,
- évaluer en temps réel en temps réel la persistance de chaque groupe de pixels dans des images acquises successives,
- déterminer en temps réel des groupes constituant des objets visibles sur la surface de la mer, en fonction de leur persistance,
- déterminer en temps réel des informations de position et de dimension d'au moins l'un des objets visibles,
- calculer périodiquement l'évolution des informations de position et de dimension de l'objet visible, et
- évaluer un risque de collision du véhicule marin avec l'objet visible en fonction de l'évolution des informations de position et de dimension de l'objet visible, un objet visible étant considéré comme dangereux si il existe un risque de collision du véhicule marin avec l'objet visible.

Selon un mode de réalisation de l'invention, le procédé comprend des étapes d'affichage d'informations relatives à chaque objet dangereux, et d'émission d'un signal d'alarme dès qu'un nouvel objet dangereux est détecté.

Selon un mode de réalisation de l'invention, la recherche dans chaque image de groupes de pixels adjacents comprend des étapes consistant à :
a) cadrer la partie utile de l'image fournie par le capteur optique,
b) mesurer l'intensité lumineuse moyenne des pixels sur au moins la partie utile de l'image,
c) comparer chaque pixel de la partie utile de l'image avec l'intensité lumineuse moyenne, et attribuer une valeur binaire au pixel en fonction du résultat de la comparaison,
d) rechercher des pixels d'une valeur binaire donnée formant des groupes de pixels adjacents.

Selon un mode de réalisation de l'invention, le cadrage de la partie utile comprend une détection automatique de la ligne d'horizon.

Selon un mode de réalisation de l'invention, les étapes de détermination des informations de position et de dimension, de calcul périodique de l'évolution des informations de position et de dimension, et d'évaluation d'un risque de collision sont effectuées pour chaque image.

### Brève description des figures

Ces objets, caractéristiques et avantages ainsi que d'autres de la présente invention seront exposés plus en détail dans la description suivante de modes de réalisation de l'invention, faite à titre non limitatif en relation avec les figures jointes parmi lesquelles :
- la figure 1 illustre un système de l'invention installé sur un navire,
- la figure 2 illustre sous la forme de bloc les fonctions du système de l'invention,
- les figures 3A et 3B illustrent un premier mode de réalisation du système de l'invention,
- les figures 4A et 4B illustrent un second mode de réalisation du système de l'invention,
- les figures 5A et 5B illustrent un troisième mode de réalisation du système de l'invention,
- les figures 6A et 6B illustrent un principe d'analyse de risque de collision appliqué par le procédé selon l'invention.

### Exposé détaillé de modes de réalisation préférés

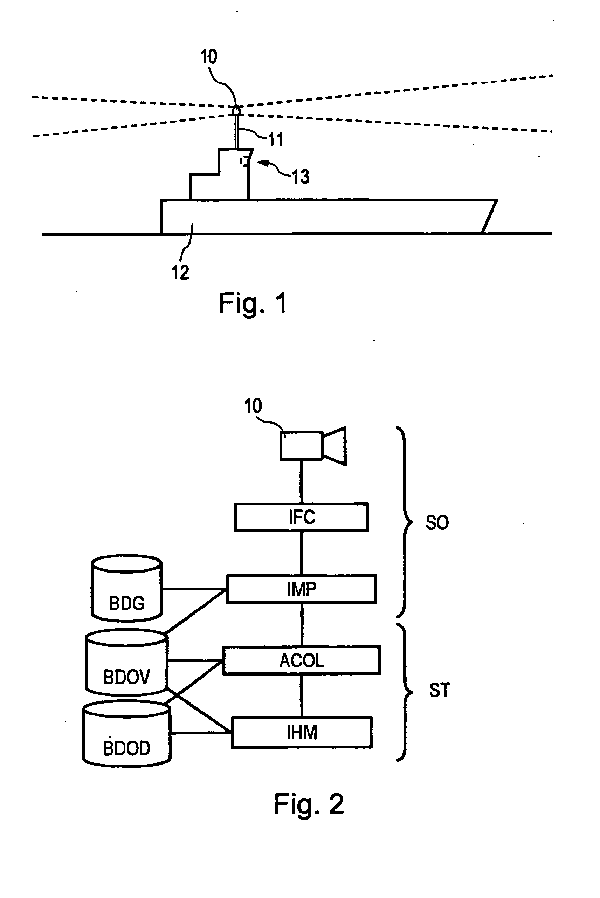

Comme illustré sur la figure 1, le système de l'invention comprend:
- un ensemble de capteurs optiques, 10, disposé ici dans les superstructures d'un navire 12, et
- un calculateur 13 implanté dans la passerelle de conduite du navire.

Comme illustré sur la figure 2, le système de l'invention comprend, sur le plan fonctionnel, deux segments, à savoir un segment optique SO et un segment tactique ST.

Le segment optique comprend :
- un ou plusieurs capteurs optiques 10 couvrant au moins partiellement l'horizon du véhicule marin,
- des moyens d'interface IFC des capteurs avec le calculateur, qui assurent l'acquisition des images fournies par le capteur et le pilotage des capteurs, et
- des moyens de traitement d'image IMP qui assurent l'extraction des informations de position d'objets.

Le segment tactique ST comprend :
- des moyens d'analyse anticollision ACOL qui effectuent un calcul périodique de l'évolution des informations de position de chaque objet visible, et évaluent un risque de collision du véhicule marin avec chaque objet visible, et
- une interface homme/machine IHM, qui peut être intégrée au poste de contrôle du véhicule marin, ou déportée à distance, et qui inclut des moyens de signalisation pour signaler qu'un objet dangereux est détecté.

L'ensemble des capteurs optiques 10 couvre avantageusement la totalité de l'horizon, sur 360°, ou une portion significative de celui-ci. Suivant la configuration du navire, et notamment les dimensions de ses superstructures, il peut être préférable de disposer un seul capteur ou plusieurs capteurs. Idéalement, sur un gros navire de charge, trois capteurs, dont un à l'avant du navire et un de chaque coté des superstructures, permettent de couvrir tout l'horizon, y compris les secteurs proches qui sont masqués par les superstructures pour un observateur situé sur la passerelle de conduite du navire.

Dans un premier mode de réalisation de l'invention, chaque capteur comprend une caméra dont le champ optique est orientable pour couvrir l'horizon par rotation. Dans un deuxième mode de réalisation de l'invention, chaque capteur comprend une caméra mono-ligne orientable montée sur un support fixe. Dans un troisième mode de réalisation de l'invention, chaque capteur comprend une ou plusieurs caméras fixes par rapport au véhicule marin et couvrant au moins une partie substantielle de l'horizon en permanence.

Compte tenu des mouvements du navire porteur, il s'agit de trouver le meilleur compromis entre la résolution de la caméra et l'exigence de stabilité. Deux solutions sont envisageables :
- soit monter la caméra sur une plate-forme stabilisée pour centrer l'image sur la zone utile autour de l'horizon,
- soit utiliser une information sur l'attitude du navire (angles de roulis et de tangage) pour ne traiter que la partie utile de l'image (points situés à une certaine distance en pixels au dessus ou au dessous de la ligne d'horizon). Cette information peut provenir soit d'un capteur externe (centrale d'attitude), soit d'un traitement d'image (détection de la ligne d'horizon) lorsque l'horizon est visible.

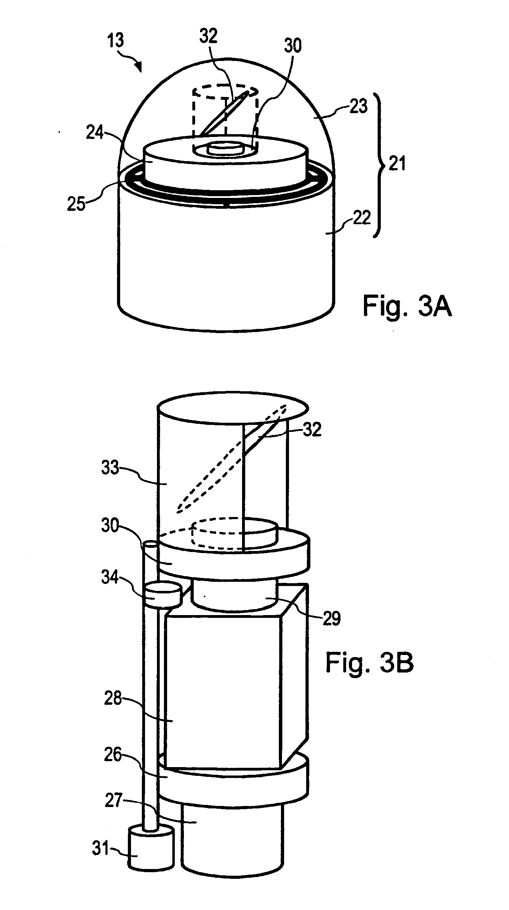

Dans le premier mode de réalisation illustré sur les figures 3A et 3B, le capteur optique 10 comprend une caméra dont le champ optique est orientable pour couvrir l'horizon par rotation. La caméra est montée sur une plate-forme stabilisée par un gyroscope. Le capteur 10 comporte :
- un boîtier 21 constitué par un socle 22 servant de support et un dôme de protection transparent 23,
- une cuve stabilisée 24 montée sur un dispositif de stabilisation composé d'une suspension à cardan 25 et d'un volant gyroscopique 26 entraîné par un moteur électrique 27,
- une caméra 28 fixée à la cuve stabilisée et portant un objectif 29 orienté au zénith,
- un ensemble tournant 30 monté dans la cuve stabilisée, mû par un moteur de rotation 31 à axe vertical placé dans le bas de la cuve stabilisée, et portant dans sa partie supérieure un miroir 32 et un pare soleil 33, la disposition du miroir, orienté à 45°, permettant à l'axe optique du miroir 32 de balayer un plan horizontal par la rotation de l'ensemble tournant 30, les rayons étant réfléchis par le miroir 32 de manière à atteindre l'objectif de la caméra, le moteur 31 entraînant l'ensemble tournant par l'intermédiaire d'un réducteur à engrenages, et
- un dispositif de mesure de la position angulaire de l'ensemble tournant, ou resolver, 34, éventuellement intégré au moteur 30 si la technologie de celui-ci le permet (moteur pas à pas).

Suivant les matériaux utilisés (alliages et/ou composites), l'ensemble du boîtier 21 peut avoir une masse totale inférieure à 2 kg et un volume inférieur à 2 litres.

Des essais sur prototype avec une vitesse de rotation du volant gyroscopique 26 de 9900 t/mn ont permis d'assurer une stabilité caractérisée par une vitesse angulaire de la cuve inférieure à 60 mrad/s (milli-radians par seconde) dans 99% des cas. Le dispositif de stabilisation donne, avec une durée d'intégration de 1/1000^{ème} de seconde, un "bougé" inférieur à 1/8^{ème} de pixel, pour une tolérance de roulis/tangage du navire de +/- 25°. Une telle performance peut être encore améliorée avec un produit de facture industrielle (usinages, ajustages, et tolérance des roulements) et une vitesse de rotation du volant gyroscopique de 15000 t/mn.

La caméra 28 présente par exemple les caractéristiques suivantes :
- une cellule CCD 1/3" permettant une exploitation en temps réel sous un format standard (JPEG),
- un format vidéo haute résolution XGA (1024 x 768 pixels) offrant le meilleur compromis entre l'ouverture angulaire de l'objectif 29 (36° en diagonale) et la résolution angulaire recherchée, et
- un objectif 29 de focale 9mm.

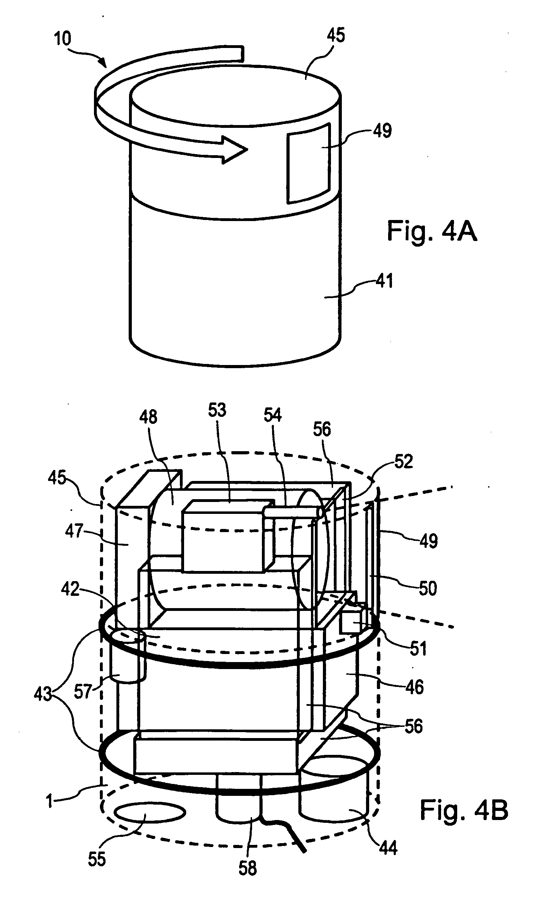

Dans un deuxième mode de réalisation illustré sur les figures 4A et 4B, le capteur optique 10 comprend une caméra mono-ligne orientable montée sur un support fixe.

Plus précisément, le capteur optique comprend :
- un boîtier cylindrique 41 fixé à la mâture du navire,
- un ensemble tournant 42 tenu dans le boîtier 41 par des roulements à billes 43 et mû par un moteur de rotation 44 à axe vertical placé dans le bas du boîtier, la partie supérieure de l'ensemble tournant comportant un capot de protection cylindrique 45 muni d'une fenêtre rectangulaire 49 qui permet aux rayons optiques de traverser le capot pour atteindre l'objectif,
- une caméra numérique 46 fixée à l'ensemble tournant 42 et dont le senseur mono ligne 47 est déporté au dessus du corps de la caméra ; le senseur comporte typiquement de 512 à 8192 cellules élémentaires photo sensibles disposées en une ligne verticale,
- un objectif 48, d'une ouverture angulaire typiquement de 30 à 55°, disposé de telle manière que son axe optique balaye l'horizon avec la rotation de l'ensemble tournant 42, et
- un volet 50 disposé de manière à obturer l'ouverture rectangulaire 49 lorsque le système est à l'arrêt afin de protéger l'intérieur du capteur des embruns et de la pluie ; le déplacement du volet est effectué à l'aide d'une commande magnétique 51.

Lorsque le système est en fonction, la protection de l'objectif 48 contre les projections de pluie franchissant l'ouverture rectangulaire 49 est assurée par une vitre de protection 52, ventilée à l'aide d'un ventilateur d'extraction 53 insufflant dans une buse d'assèchement 54 de l'air chauffé par les différentes sources de chaleur de l'ensemble tournant et du boîtier (moteur de rotation, électronique et caméra).

Les cartes électroniques 56 intégrant le calculateur et les circuits associés du système d'alerte anticollision sont solidaires de l'ensemble tournant 42.

L'ensemble tournant 42 porte également un codeur de gisement 57 qui mesure la position angulaire de l'ensemble tournant.

Les données numériques de sortie du système d'alerte anticollision sont transmises par l'intermédiaire d'un contacteur tournant 58 qui assure également le transfert vers le calculateur de données provenant du compas du navire, ainsi que le contact de l'alimentation des organes de l'ensemble tournant 42.

Dans le deuxième mode de réalisation, l'image panoramique de la mer sur 360° autour du capteur 10 est réalisée par le balayage du pinceau optique déterminé par la rotation du capteur mono-ligne. L'ouverture angulaire verticale de ce pinceau est choisie de manière à couvrir la plage utile d'orientation en site même avec des mouvements de roulis/tangage.

La résolution angulaire de l'image dépend des résolutions angulaires horizontale et verticale.

La résolution angulaire horizontale de l'image est fonction de la vitesse de rotation et de la fréquence de lecture de ligne. Les caméras linéaires existantes ont des fréquences de lecture ligne allant typiquement de 6 à 87kHz. En pratique, la limite de la fréquence de lecture dépend des conditions d'éclairement et de la sensibilité lumineuse. Pour une vitesse de rotation allant typiquement de 0, 12 à 2 tours par seconde, la résolution horizontale est comprise entre 0,01 et 2 mrad/pixel (milli-radians par pixel).

La résolution angulaire verticale est déterminée par le nombre de pixels du capteur et l'ouverture angulaire de l'objectif. Pour un nombre de pixels allant de 512 à 8192 et une ouverture angulaire verticale comprise entre 4 et 45°, la résolution verticale est comprise entre 0,01 et 1,5 mrad/pixel.

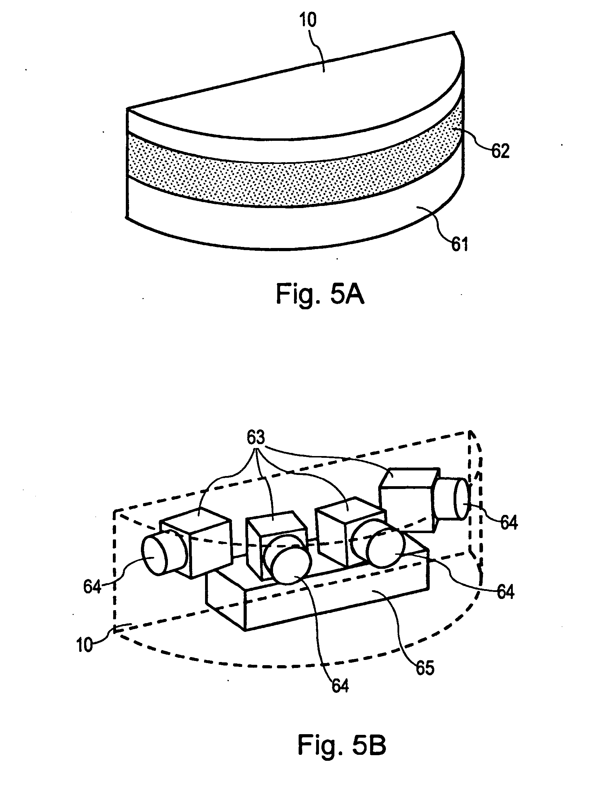

Dans un troisième mode de réalisation illustré sur les figures 5A et 5B, le capteur optique 10 comprend un ensemble de caméras fixes. Plus précisément, le capteur optique comprend :
- un boîtier 61 fixé à la superstructure du navire et comportant une ouverture vitrée 62,
- une ou plusieurs caméras numériques 63 (typiquement quatre) fixées au boîtier 61,
- un objectif 64 pour chaque caméra 63, l'ensemble des objectifs étant disposé de telle manière que les secteurs qu'ils balayent couvrent une portion substantielle de l'horizon (typiquement 187°), et
- un dispositif de connexion et de multiplexage 65 permettant de traiter simultanément les images provenant de toutes les caméras. Ce dispositif peut intégrer une carte électronique réalisant une partie du traitement d'image.

Dans ce troisième mode de réalisation, la résolution des images est liée aux mouvements de plate-forme du navire porteur. Typiquement, sur un gros navire ayant un roulis limité à +/- 10°, l'utilisation de caméras ayant une définition de 1280 x 1024 pixels et d'objectifs de 8 à 12 mm permet d'obtenir la résolution nécessaire, dans toutes les conditions d'éclairement, pour une portée de détection allant jusqu'à 10 000 mètres.

L'interface avec les capteurs optique (carte et circuit électronique, et/ou logiciel, et/ou connexions filaires, et/ou connexions sans fil) entre les capteurs optiques et le calculateur associé, est adaptée à l'architecture retenue. Cette interface peut donc comprendre:
- une interface intégrée au calculateur,
- une interface intégrée aux capteurs,
- une interface contenue dans un coffret intermédiaire.

L'interface avec les capteurs optiques assure deux fonctions :
- l'acquisition des images et, dans le cas ou les capteurs comportent un ensemble tournant, l'acquisition de la mesure d'orientation, et
- le pilotage des capteurs, c'est-à-dire la commande des caméras et, dans le cas ou les capteurs comportent un ensemble tournant, la commande des moteurs d'orientation.

Dans le premier mode de réalisation décrit plus haut et illustré sur les figures 3A et 3B, où le capteur optique 10 comprend une caméra dont le champ optique est orientable pour couvrir l'horizon par rotation, l'interface IFC est un circuit électronique intégré au calculateur.

Dans le deuxième mode de réalisation décrit plus haut et illustré sur les figures 4A et 4B, où le capteur optique 10 utilise une caméra mono-ligne tournante, l'interface IFC est un circuit intégré dans les cartes électroniques 56 montées sur l'ensemble tournant 42.

Dans le troisième mode de réalisation décrit plus haut et illustré sur les figures 5A et 5B, où le capteur optique 10 comprend un ensemble de caméras fixes, l'interface IFC est un circuit intégré dans les cartes électroniques du dispositif de connexion et de multiplexage 65.

Le procédé de traitement d'image mis en oeuvre par les moyens de traitement d'image IMP permet d'extraire en temps réel, de chaque image fournie par le capteur optique (10) des informations de position d'objets visibles sur la surface de la mer, en éliminant les vagues et l'écume.

Ce traitement d'image comprend des étapes consistant à:
- cadrer la partie utile de l'image fournie par le capteur optique (10),
- mesurer l'intensité lumineuse moyenne sur au moins une partie de l'image,
- comparer chaque pixel avec l'intensité lumineuse moyenne, et attribuer une valeur binaire à chaque pixel suivant que la différence est au dessus ou au dessous d'un seuil d'intensité lumineuse,
- rechercher des pixels d'une valeur donnée formant des groupes de pixels adjacents, chaque groupe de pixels adjacents constituant un objet visible, et
- mesurer une position et des dimensions des objets visibles.

Le cadrage de la partie utile peut comprendre une détection automatique de la ligne d'horizon. Il peut inclure également un redressement de l'image pour que la ligne d'horizon reste parallèle au bord inférieur de l'image.

La partie utile de l'image peut elle-même être scindée en plusieurs parties, par exemple en fonction de la distance entre chaque pixel et la ligne d'horizon; qui détermine grossièrement l'éloignement du point correspondant par rapport au navire porteur.

La mesure de l'intensité lumineuse peut se faire, suivant le type de caméra utilisé, sur la luminance seulement, et/ou sur une ou plusieurs des trois composantes chromatiques (rouge, bleu, jaune).

La comparaison de chaque pixel avec l'intensité lumineuse moyenne peut être effectuée simultanément avec plusieurs paramètres (seuil, couleur).

La détection des objets visibles peut comprendre une étape d'évaluation de la persistance de chaque groupe de pixels dans des images successives. Dans ce but, les informations de position de tous les groupes de pixels de chaque image sont enregistrées dans une base de données. La comparaison des bases de données successives correspondant à la succession d'images d'un même secteur permet de déterminer des groupes constituant des objets visibles en fonction de leur persistance, c'est-à-dire en fonction du pourcentage d'apparition de ces groupes dans un certain nombre d'images. Ce procédé permet d'éliminer les objets "non persistants" : vagues, reflets, écume, et de ne conserver que les objets correspondant à des navires ou à des objets flottant à la surface.

Dans le premier mode de réalisation où le capteur optique 10 comprend une caméra dont le champ optique est orientable pour couvrir l'horizon par rotation, le traitement d'image est effectué sur chaque image, soit typiquement toutes les 1/15ème de seconde. Ce traitement comporte les étapes suivantes :
- détection automatique de la ligne d'horizon,
- redressement de l'image pour que la ligne d'horizon reste parallèle au bord inférieur de l'image,
- mesure de l'intensité lumineuse moyenne sur au moins une partie de l'image centrée sur l'horizon,
- comparaison de chaque pixel avec un seuil d'intensité lumineuse fonction de l'intensité lumineuse moyenne, et attribution d'une valeur binaire à chaque pixel suivant que la différence est au dessus ou au dessous du seuil d'intensité lumineuse,
- recherche des pixels d'une valeur donnée formant des groupes de pixels adjacents,
- enregistrement des informations de position de tous les groupes de pixels dans une base de données de groupes détectés BDG,
- comparaison des bases de données de groupes détectés constituées successivement à chaque image fournie par le capteur optique, et
- détermination des groupes constituant des objets visibles en fonction de leur persistance dans plusieurs bases de données de groupes détectés.

Dans le deuxième mode de réalisation, le traitement d'image par les moyens de traitement d'image IMP est effectué tout d'abord sur chaque image élémentaire correspondant à une ligne verticale, soit typiquement toutes les 1/3000ème de seconde. Ce traitement comporte les étapes suivantes :
- détection automatique de la ligne d'horizon,
- recalage de l'image pour que la ligne d'horizon reste à une distance constante, en nombre de pixels, du bord inférieur de l'image,
- mesure de l'intensité lumineuse moyenne sur au moins une partie de l'image centrée sur l'horizon,
- comparaison de chaque pixel avec l'intensité lumineuse moyenne, et attribution d'une valeur binaire à chaque pixel suivant que la différence est au dessus ou au dessous d'un seuil d'intensité lumineuse, et
- reconstitution d'une image formée par la succession des lignes verticales.

Sur chaque image ainsi reconstituée, soit typiquement toutes les secondes, le traitement d'image comprend les étapes suivantes:
- recherche des pixels d'une valeur donnée formant des groupes de pixels adjacents,
- enregistrement des informations de position de tous les groupes de pixels dans une base de données de groupes détectés BDG,
- comparaison des bases de données de groupes détectés constituées à chaque image successive reconstituée (comparaison effectuée typiquement sur 3 à 10 images), et
- détermination des groupes constituant des objets visibles en fonction de leur persistance dans plusieurs bases de données de groupes détectés.

Dans le troisième mode de réalisation, le traitement d'image est effectué par les moyens de traitement d'image IMP sur chaque image, soit typiquement toutes les secondes. Ce traitement comporte les étapes suivantes:
- détection automatique de la ligne d'horizon,
- redressement de l'image pour que la ligne d'horizon reste parallèle au bord inférieur de l'image,
- mesure de l'intensité lumineuse moyenne sur au moins une partie de l'image centrée sur l'horizon,
- comparaison de chaque pixel avec l'intensité lumineuse moyenne, et attribution d'une valeur binaire à chaque pixel suivant que la différence est au dessus ou au dessous d'un seuil d'intensité lumineuse,
- recherche des pixels d'une valeur donnée formant des groupes de pixels adjacents,
- enregistrement des informations de position de tous les groupes de pixels dans une base de données de groupes détectés BDG,
- comparaison des bases de données de groupes détectés constituées à chaque image successive (typiquement sur 3 à 10 images), et
- détermination des groupes constituant des objets visibles en fonction de leur persistance dans plusieurs bases de données de groupes détectés.

Les caractéristiques des objets visibles sont mémorisées dans une base de données d'objets visibles BDOV.

D'une manière générale, le capteur optique associé au traitement d'image présente les caractéristiques suivantes :
- il fournit des informations de détection, à savoir la présence d'un objet, son azimut, et dans le cas d'un système à plusieurs capteurs, la distance de l'objet.
- il permet une détection dans le visible, dans les mêmes conditions de visibilité que l'oeil humain, de jour comme de nuit ; avec des capteurs appropriés (par exemple sensible aux infrarouges), il peut opérer dans des conditions plus sévères,
- de nuit, le système peut comprendre un dispositif d'illumination infrarouge, sachant que la distance de détection d'obstacles non éclairés peut aller jusqu'à 2000 mètres,
- il présente une distance de détection qui peut aller, suivant la configuration du système et la cinématique du véhicule marin porteur, jusqu'à 10 000 mètres, tout en détectant les objets les plus proches,
- il permet de repérer des objets non détectés par le radar, comme les petites embarcations et les épaves flottantes,
- le traitement d'image peut être effectué aussi bien en couleur qu'en noir et blanc,
- il peut fonctionner avec des mouvements de plate-forme suivants : roulis (+/- 35°), période de 5 à 15 secondes, tangage (+/- 15°), vitesse angulaire inférieure à 10°/sec.
- il est conditionné d'une manière adaptée au milieu marin en termes d'étanchéité, de protection mécanique et électrique, et de résistance au soleil, aux embruns et aux vibrations.

Le procédé d'analyse anticollision mis en oeuvre par les moyens d'analyse anticollision ACOL comporte les étapes suivantes :
- détermination d'informations de position de chaque objet visible dans la base de données BDOV, en fonction de leur position dans les images fournies par le capteur optique,
- calcul périodique de l'évolution des informations de position de chaque objet visible,
- évaluation du risque de collision du véhicule marin avec chaque objet visible en fonction de l'évolution des informations de position de l'objet visible.

Les informations de position d'un objet visible incluent son azimut, son site (écart angulaire par rapport à la ligne d'horizon), et éventuellement sa distance lorsque celle-ci est peut-être calculée (dans le cas d'un système comportant plusieurs capteurs). Ces informations sont complétées par une indication des dimensions apparentes de l'objet dans l'image : hauteur et/ou largeur en nombre de pixels.

Le principe d'analyse du risque de collision appliqué par l'invention est fondé sur l'évolution de l'azimut d'un objet visible, et sur l'évolution de ses dimensions et éventuellement de sa distance lorsque celle-ci est calculée.

Plus précisément, le procédé d'analyse anticollision comprend les étapes suivantes:
- calcul périodique de l'évolution des informations de position et de dimension de chaque objet visible par analyse de la base de données des objets visibles toutes les 30 secondes, sur un historique allant jusqu'à 20 minutes,
- extraction des objets dont la variation d'azimut est inférieure à 1,5°/min (degrés par minutes),
- extraction des objets dont la dimension grandit et/ou dont la distance (lorsqu'elle est calculée) diminue, et
- constitution d'une base de données d'objets dangereux BDOD rassemblant les caractéristiques des objets visibles extraits lors des deux étapes précédentes.

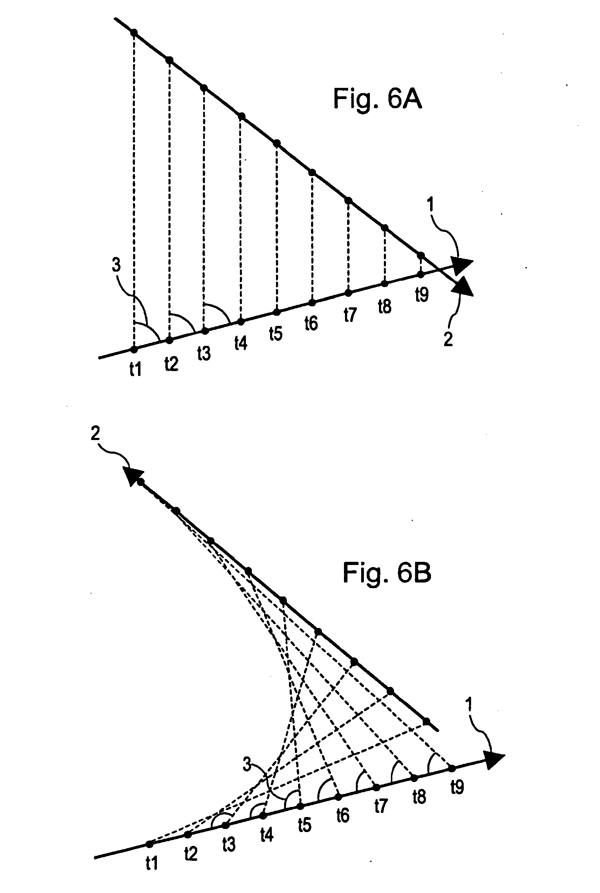

L'analyse de l'évolution de l'azimut d'un objet visible peut servir de base à une estimation d'un risque de collision, comme cela est illustré sur les figures 6A et 6B. Ces figures représentent la trajectoire 1 du navire et la trajectoire estimée 2 d'un objet visible. Les points formés sur les trajectoires 1, 2 montrent les positions respectives du navire et de l'objet à des instants t1 à t9.

La figure 6A illustre le cas d'un objet visible estimé dangereux. On peut constater sur cette figure que l'azimut de l'objet visible est constant par rapport à l'azimut du navire.

La figure 6B illustre le cas d'un objet visible estimé non dangereux. Dans ce cas, l'azimut de l'objet visible par rapport au navire n'est pas constant.

La variation de la taille de chaque objet visible constitue également une information à considérer pour estimer un risque de collision. En effet, si le navire et l'objet visible suivent des trajectoires parallèles et à la même vitesse, l'azimut de l'objet est constant par rapport à celui du navire bien que l'objet ne représente pas une menace pour le navire. En outre, si la taille apparente d'un objet visible augmente, cela signifie qu'il se rapproche du navire.

Si le navire est équipé d'un automate ARPA couplé à un système radar, il peut en outre être prévu d'acquérir des azimuts et distances d'échos radars pris en compte par l'automate "ARPA" et des pistes "AIS". Les positions des échos radar et des pistes AIS peuvent ensuite être comparées avec la base de données des objets dangereux BDOD, pour mettre en relation chaque piste externe avec un objet dangereux et inversement. La base de données des objets dangereux peut ainsi rassembler tous les objets dangereux détectés par le système selon l'invention et par les autres équipements du navire, chaque objet dangereux étant associé dans la base de données à une information indiquant par quel(s) moyen(s) chaque objet a été détecté.

Les bases de données d'objets visibles BDOV et d'objets dangereux BDOD sont codées en ANSI sous un format de trame compatible avec les logiciels couramment utilisés dans les systèmes de traitement de données à bord des navires, typiquement le format NMEA (National Maritime Electronics Association) ou le format XML (eXtended Markup Language). Les attributs associés à chaque objet dans ces bases de données incluent avantageusement :
- l'heure de la première détection,
- l'azimut,
- la largeur angulaire,
- la distance au navire lorsqu'elle est calculée,
- la précision sur la distance au navire,
- la persistance, et
- le contraste.

L'interface homme/machine IHM assure les fonctions d'information de l'équipage et de commande du système. La fonction d'information de l'équipage comprend:
- l'émission d'un signal d'alerte, qui peut être sonore et/ou visuel et/ou adapté à un besoin spécifique (par exemple voix synthétique, ou vibration sur un boîtier porté), dès que la base de données d'objets dangereux contient un nouvel élément,
- l'affichage des informations de position d'un objet dangereux, et notamment de son azimut, et d'une indication de l'urgence de la situation (par exemple une distance ou un délai avant collision), et
- l'enregistrement d'un historique des bases de données des objets visibles et des objets dangereux.

On peut également prévoir que l'interface homme/machine IHM offre la possibilité d'afficher l'image en temps réel d'un objet en vue, sur requête de l'opérateur.

Lorsque le navire comporte plusieurs moyens de détection, l'interface homme/machine IHM peut également afficher une indication du ou des moyen(s) de détection de chaque objet. Lorsque le navire est équipé d'un dispositif ARPA d'aide à l'anticollision associé à un radar, L'interface homme/machine permet avantageusement de superposer sous forme graphique les informations issues des bases de données d'objets visibles et d'objets dangereux avec l'affichage ARPA. Si le navire est équipé d'un dispositif de cartographie numérique, par exemple suivant la norme ECDIS (Electronic Chart Display and Information System), l'interface homme/machine peut superposer sous forme graphique les informations issues des bases de données d'objets visibles et d'objets dangereux avec l'affichage ECDIS.

La fonction de commande du système comporte des commandes de gestion courante du fonctionnement du système, et des commandes permettant d'assurer la maintenance du système anticollision.

Les commandes de gestion courante comprennent une commande de mise en marche et d'arrêt du système, et le cas échéant, des commandes permettant de sélectionner d'autres moyens de détection à prendre en compte.

Les commandes de maintenance du système comprennent des commandes de mise en marche, d'arrêt et de réglage de chaque caméra, des commandes permettant d'effectuer des réglages internes du calculateur (seuils, paramètres), et des commandes de lancement de procédures automatiques de calibration et de tests internes du système.

L'interface homme/machine IHM est reliée en entrée à la base de données d'objets visibles BDOV, ainsi qu'à la base de données d'objets dangereux DBOD. Elle peut être intégrée au poste de contrôle du véhicule marin, ou déportée à distance.

Dans un mode de réalisation du système selon l'invention, l'interface homme/machine IHM est intégrée à un système de navigation extérieur. Les fonctions d'alerte, d'affichage et de commande viennent enrichir les interfaces existantes du système de navigation extérieur pour l'exploitation de moyens de visualisation ARPA ou ECDIS.

Les moyens de visualisation ARPA affichent sur un écran de visualisation une zone circulaire autour du navire. La vue ARPA est en permanence centrée sur le navire. Le repérage est facilité par un trait radial calé sur le nord ou relatif à l'axe du navire, et par une série d'anneaux de distance.

Les moyens de visualisation ECDIS affichent sur un écran de visualisation une carte géographique rectangulaire respectant une norme internationale. Cette carte est caractérisée par la position géographique de son centre, son échelle, le type de projection (en général Mercator) et son orientation (le plus souvent au nord ou selon l'axe du Navire). Le repérage sur cette carte est facilité par un quadrillage représentant les latitudes et longitudes constantes.

Ces deux types de moyens de visualisation affichent sous la forme de symboles spécifiques les objets visibles et les objets dangereux. De cette manière, le risque de collision peut être évalué visuellement.

Sur intervention de l'opérateur, une image d'un objet visible peut être présentée dans une fenêtre affichée à l'écran de visualisation. Cette image est rafraîchie typiquement toutes les secondes pour permettre une appréciation visuelle en temps réel de l'évolution d'un navire détecté.

Lorsque le système selon l'invention reçoit des informations de plusieurs capteurs, il peut également effectuer pour chaque objet une mesure de l'écart angulaire des azimuts de l'objet fournis par les différents capteurs, ainsi qu'un calcul de la distance de l'objet.

Grâce à ces dispositions, le système anticollision selon l'invention peut offrir une certaine redondance avec les moyens existants. Ainsi, il offre une signalisation fiable avec un taux de fausses alarmes relativement faible.

Grâce à ces caractéristiques, le système de l'invention trouve des applications dans de nombreux domaines, et notamment:
- dans le domaine des navires armés par des professionnels (commerce, pêche, grande plaisance, navires du domaine public),
- dans le domaine des bateaux de plaisance, par sa contribution à la sécurité et au confort de l'équipage, spécialement en l'absence de radar,
- dans le domaine des chenaux de navigation côtiers (bouées, phares, balises, jetées, ...), par une surveillance et un contrôle du trafic et une redondance de la sécurité anticollision dans les zones les plus dangereuses,
- dans le domaine des drones navals, par la possibilité de garantir un contrôle permanent de la sécurité anticollision, même lorsque la zone de déploiement d'un drone n'est pas sous le contrôle visuel du poste de commande.

En outre, sur tout véhicule marin le système de l'invention permet de réaliser automatiquement un enregistrement de toutes les détections d'objets visibles, susceptibles de venir enrichir les données enregistrées automatiquement dans une "boîte noire", ou VDR (Voyage Data Recorder).

Il apparaîtra clairement à l'homme de l'art que le système selon la présente invention est susceptible de diverses autres variantes de réalisation et applications. Ainsi, l'invention n'est pas limitée à un système dans lequel le capteur optique couvre l'ensemble de l'horizon du véhicule marin. La zone surveillée par le capteur optique peut en effet être limitée à un secteur avant du véhicule marin. I1 n'est pas non plus indispensable que le système ait accès à des informations de position telles que l'azimut, du véhicule marin, ou à des informations fournies par d'autres systèmes équipant le véhicule marin. En effet, la position des objets détectés peut être déterminée par rapport au véhicule marin et à son cap. Par ailleurs, le système selon l'invention peut ne pas comporter d'interface homme/machine, et simplement envoyer les informations relatives à la détection d'objets dangereux à un autre système du véhicule marin, comportant une interface homme/machine.

## Revendications

1. Système d'alerte anticollision pour véhicule marin (12), comprenant :
- au moins un capteur optique (10) couvrant au moins partiellement l'horizon du véhicule marin, et fournissant des images,
- des moyens de traitement d'image (IMP) pour rechercher en temps réel dans chaque image fournie par le capteur optique des groupes de pixels adjacents en fonction de l'intensité lumineuse de chaque pixel de l'image, pour évaluer en temps réel la persistance de chaque groupe de pixels dans des images successives, pour déterminer en temps réel des groupes constituant des objets visibles sur la surface de la mer, en fonction de leur persistance, et pour déterminer en temps réel des informations de position et de dimension d'au moins l'un des objets visibles,
- des moyens d'analyse anticollision (ACOL) pour calculer périodiquement l'évolution des informations de position et de dimension d'au moins un objet visible, et pour évaluer un risque de collision du véhicule marin avec l'objet visible en fonction de l'évolution des informations de position et de dimension de l'objet visible.

2. Système selon la revendication 1, dans lequel le capteur optique (10) comprend au moins une caméra fixe par rapport au véhicule marin et couvre au moins une partie substantielle de l'horizon en permanence.

3. Système selon la revendication 1, dans lequel le capteur optique (10) comprend au moins une caméra dont le champ optique est orientable pour couvrir l'horizon par rotation.

4. Système selon la revendication 3, dans lequel le capteur optique (10) comprend :
- une caméra (28) comportant un objectif (29) ayant un axe optique orienté sensiblement verticalement,
- un ensemble tournant (30) mû par un moteur (31) et portant un miroir (32) disposé dans le champ optique de l'objectif et orienté sensiblement à 45° par rapport à l'axe optique de l'objectif, et
- un dispositif (14) de mesure de la position angulaire de l'ensemble tournant (30).

5. Système selon l'une des revendications 1 à 4, comprenant :
- un boîtier (21) constitué par un socle (22) servant de support, et
- une cuve stabilisée (24) montée sur un dispositif de stabilisation (25, 26), et servant de support au capteur optique (10).

6. Système selon la revendication 5, dans lequel le dispositif de stabilisation comprend une suspension à la cardan (25) et un volant gyroscopique (26).

7. Système selon la revendication 3, dans lequel le capteur (10) comprend une caméra mono-ligne entraînée en rotation autour d'un axe vertical.

8. Système selon la revendication 7, comprenant :
- un boîtier (41),
- un ensemble tournant (42) tenu dans le boîtier (41) et mû par un moteur (44) à axe vertical,
- un capot de protection (45) de l'ensemble tournant muni d'une ouverture (49),
- une caméra numérique (46) fixée à l'ensemble tournant, et comprenant un senseur mono-ligne (47),
- un objectif (48) dont l'axe optique est apte à balayer l'horizon par rotation de l'ensemble tournant (42).

9. Système selon la revendication 8, dans lequel le capteur (10) comprend une vitre de protection (52) ventilée à l'aide d'un ventilateur d'extraction (53) pour protéger l'objectif (48).

10. Système selon la revendication 8 ou 9, dans lequel des cartes électroniques (56) de traitement d'image sont solidaires de l'ensemble tournant (42).

11. Système selon l'une des revendications 8 à 10, comprenant un dispositif de mesure (57) de la position angulaire de l'ensemble tournant (42).

12. Système selon l'une des revendications 8 à 11, dans lequel les données numériques de sortie du capteur optique (10) sont transmises par l'intermédiaire de contacts tournants (58) qui assurent également le contact de l'alimentation des organes de l'ensemble tournant (42).

13. Système selon l'une des revendications 1 à 12, comprenant des moyens d'interface avec un compas.

14. Système selon l'une des revendications 1 à 13, comprenant des moyens d'interface avec d'autres capteurs et des moyens d'analyse effectuant une analyse de cohérence avec des informations fournies par les autres capteurs.

15. Système selon l'une des revendications 1 à 14, comprenant des moyens de signalisation (IHM) pour signaler qu'un objet dangereux est détecté.

16. Système selon l'une des revendications 1 à 15, dans lequel les informations de position de chaque objet visible comprennent un azimut de l'objet.

17. Procédé d'alerte anticollision dans un système d'alerte anticollision pour véhicule marin (12) comprenant au moins un capteur optique (10) couvrant au moins partiellement l'horizon du véhicule marin, **caractérisé en ce qu'**il comprend des étapes consistant à :
- acquérir du capteur optique des images incluant une partie de l'horizon du véhicule marin,
- rechercher en temps réel dans chaque image acquise des groupes de pixels adjacents en fonction de l'intensité lumineuse de chaque pixel de l'image,
- évaluer en temps réel la persistance de chaque groupe de pixels dans des images acquises successives,
- déterminer en temps réel des groupes constituant des objets visibles sur la surface de la mer, en fonction de leur persistance,
- déterminer en temps réel des informations de position et de dimension d'au moins l'un des objets visibles,
- calculer périodiquement l'évolution des informations de position et de dimension de l'objet visible, et
- évaluer un risque de collision du véhicule marin avec l'objet visible en fonction de l'évolution des informations de position et de dimension de l'objet visible, un objet visible étant considéré comme dangereux si il existe un risque de collision du véhicule marin avec l'objet visible.

18. Procédé selon la revendication 17, comprenant des étapes d'affichage d'informations relatives à chaque objet dangereux, et d'émission d'un signal d'alarme dès qu'un nouvel objet dangereux est détecté.

19. Procédé selon la revendication 17 ou 18, dans lequel la recherche dans chaque image de groupes de pixels adjacents comprend des étapes consistant à :
a) cadrer la partie utile de l'image fournie par le capteur optique (10),
b) mesurer l'intensité lumineuse moyenne des pixels sur au moins la partie utile de l'image,
c) comparer chaque pixel de la partie utile de l'image avec l'intensité lumineuse moyenne, et attribuer une valeur binaire au pixel en fonction du résultat de la comparaison,
d) rechercher des pixels d'une valeur binaire donnée formant des groupes de pixels adjacents.

20. Procédé selon la revendication 19, dans lequel le cadrage de la partie utile comprend une détection automatique de la ligne d'horizon.

21. Procédé selon l'une des revendications 17 à 20, dans lequel les étapes de détermination des informations de position et de dimension, de calcul périodique de l'évolution des informations de position et de dimension, et d'évaluation d'un risque de collision sont effectuées pour chaque image.

## Claims

1. An anti-collision warning system for marine vehicle (12), comprising:
- at least one optical sensor (10) covering at least partially the horizon of the marine vehicle, and supplying images,
- image processing means (IMP) for searching in real time, in each image supplied by the optical sensor, for groups of adjacent pixels according to the light intensity of each pixel of the image, for evaluating in real time the persistence of each group of pixels in successive images, for determining in real time groups constituting visible objects on the surface of the sea, according to their persistence, and for determining in real time position and dimension information of at least one of the visible objects,
- anti-collision analysis means (ACOL) for periodically calculating the evolution of the position and dimension information of at least one visible object, and for assessing a risk of the marine vehicle colliding with the visible object according to the evolution of the position and dimension information of the visible object.

2. System according to claim 1, wherein the optical sensor (10) comprises at least one video camera fixed in relation to the marine vehicle and covers at least a substantial portion of the horizon continuously.

3. System according to claim 1, wherein the optical sensor (10) comprises at least one video camera the optical field of which can be oriented to cover the horizon by rotation.

4. System according to claim 3, wherein the optical sensor (10) comprises:
- a video camera (28) comprising a lens (29) having an optical axis oriented substantially vertically,
- a rotating assembly (30) driven by a motor (31) and bearing a mirror (32) arranged in the optical field of the lens and oriented substantially at 45° in relation to the optical axis of the lens, and
- a device (14) for measuring the angular position of the rotating assembly (30).

5. System according to one of claims 1 to 4, comprising:
- a housing (21) made up of a base (22) used as a stand, and
- a stabilized tank (24) mounted onto a stabilization device (25, 26), and used as a stand for the optical sensor (10).

6. System according to claim 5, wherein the stabilization device comprises a gimbal (25) and a gyro wheel (26).

7. System according to claim 3, wherein the sensor (10) comprises a single-line video camera rotatably-driven around a vertical axis.

8. System according to claim 7, comprising:
- a housing (41),
- a rotating assembly (42) held in the housing (41) and driven by a vertical axis motor (44),
- a protection cover (45) for protecting the rotating assembly having an opening (49),
- a digital video camera (46) fixed onto the rotating assembly, and comprising a single-line detecting element (47),
- a lens (48) the optical axis of which is capable of scanning the horizon by rotation of the rotating assembly (42).

9. System according to claim 8, wherein the sensor (10) comprises a protective glass (52) ventilated using an exhaust fan (53) to protect the lens (48).

10. System according to claim 8 or 9, wherein image processing integrated circuit cards (56) are fitted into the rotating assembly (42).

11. System according to one of claims 8 to 10, comprising a measuring device (57) for measuring the angular position of the rotating assembly (42).

12. System according to one of claims 8 to 11, wherein the digital output data of the optical sensor (10) are transmitted through rotating contacts (58) which also ensure the contact of the power supply of the units of the rotating assembly (42).

13. System according to one of claims 1 to 12, comprising means for interfacing with a compass.

14. System according to one of claims 1 to 13, comprising means for interfacing with other sensors and analysis means performing an analysis of consistency with information supplied by the other sensors.

15. System according to one of claims 1 to 14, comprising signaling means (IHM) to signal that a dangerous object is detected.

16. System according to one of claims 1 to 15, wherein the position information of each visible object comprises an azimuth of the object.

17. An anti-collision warning method in an anti-collision warning system for marine vehicle (12) comprising at least one optical sensor (10) covering at least partially the horizon of the marine vehicle, **characterized in that** it comprises steps of:
- acquiring from the optical sensor images including a portion of the horizon of the marine vehicle
- searching in real time, in each image acquired, for groups of adjacent pixels according to the light intensity of each pixel of the image,
- evaluating in real time the persistence of each group of pixels in successive acquired images,
- determining in real time groups constituting visible objects on the surface of the sea, according to their persistence,
- determining in real time position and dimension information of at least one of the visible objects
- periodically calculating the evolution of the position and dimension information of the visible object, and
- assessing a risk of the marine vehicle colliding with the visible object according to the evolution of the position and dimension information of the visible object, a visible object being considered dangerous if there is a risk of the marine vehicle colliding with the visible object.

18. Method according to claim 17, comprising steps of displaying information concerning each dangerous object, and of sending a warning signal as soon as a new dangerous object is detected.

19. Method according to claim 17 or 18, wherein the search for groups of adjacent pixels in each image comprises steps of:
a) framing the useful portion of the image supplied by the optical sensor (10),
b) measuring the average light intensity of the pixels on at least the useful portion of the image,
c) comparing each pixel of the useful portion of the image with the average light intensity, and allocating a binary value to the pixel according to the result of the comparison,
d) searching for pixels of a given binary value forming groups of adjacent pixels.

20. Method according to claim 19, wherein the framing of the useful portion comprises an automatic detection of the sky-line.

21. Method according to one of claims 17 to 20, wherein the steps of determining the position and dimension information, of periodically calculating the evolution of the position and dimension information, and of assessing a risk of collision, are performed for each image.

## Patentansprüche

1. Kollisionswarnsystem für ein Seefahrzeug (12), umfassend:
- mindestens einen optischen Sensor (10), der mindestens teilweise den Horizont des Seefahrzeugs abdeckt und Bilder liefert,
- Bildbearbeitungsmittel (IMP), um in Echtzeit in jedem vom optischen Sensor gelieferten Bild aneinander grenzende Pixelgruppen in Abhängigkeit von der Leuchtintensität jedes Pixels des Bildes zu suchen, um in Echtzeit die Beständigkeit jeder Pixelgruppe in aufeinander folgenden Bildern zu bewerten, um in Echtzeit Gruppen, die sichtbare Objekte auf der Oberfläche des Meeres bilden, in Abhängigkeit von ihrer Beständigkeit zu bestimmen und um in Echtzeit Informationen über die Position und die Dimension mindestens eines der sichtbaren Objekte zu bestimmen,
- Kollisionsanalysemittel (ACOL), um periodisch die Entwicklung der Informationen über die Position und die Dimension mindestens eines sichtbaren Objekts zu berechnen und eine Gefahr einer Kollision des Seefahrzeugs mit dem sichtbaren Objekt in Abhängigkeit von der Entwicklung der Informationen über die Position und Dimension des sichtbaren Objekts zu bewerten.

2. System nach Anspruch 1, bei dem der optische Sensor (10) mindestens eine in Bezug zum Seefahrzeug feste Kamera umfasst und mindestens einen wesentlichen Teil des Horizonts permanent abdeckt.

3. System nach Anspruch 1, bei dem der optische Sensor (10) mindestens eine Kamera umfasst, deren optisches Feld ausrichtbar ist, um den Horizont durch Rotation abzudecken.

4. System nach Anspruch 3, bei dem der optische Sensor (10) umfasst:
- eine Kamera (28), umfassend ein Objektiv (29) mit einer optischen Achse, die im Wesentlichen vertikal ausgerichtet ist,
- eine Dreheinheit (30), die von einem Motor (31) bewegt wird und einen Spiegel (32) trägt, der im optischen Feld des Objektivs angeordnet und im Wesentlichen 45° zur optischen Achse des Objektivs ausgerichtet ist, und
- eine Vorrichtung (14) zum Messen der Winkelposition der Dreheinheit (30).

5. System nach einem der Ansprüche 1 bis 4, umfassend:
- ein Gehäuse (21), das von einem Sockel (22) gebildet ist, der als Stütze dient, und
- eine stabilisierte Wanne (24), die auf einer Stabilisierungsvorrichtung (25, 26) montiert ist und als Stütze für den optischen Sensor (10) dient.

6. System nach Anspruch 5, bei dem die Stabilisierungsvorrichtung eine Kardanaufhängung (25) und ein Kreiselrad (26) umfasst.

7. System nach Anspruch 3, bei dem der Sensor (10) eine Einlinienkamera umfasst, die in Rotation um eine Vertikalachse angetrieben wird.

8. System nach Anspruch 7, umfassend:
- ein Gehäuse (41),
- eine Dreheinheit (42), die in dem Gehäuse (41) gehalten und von einem Motor (44) mit Vertikalachse bewegt wird,
- eine Schutzkappe (45) für die Dreheinheit, die mit einer Öffnung (49) versehen ist,
- eine Digitalkamera (46), die an der Dreheinheit befestigt ist und einen Einliniensensor (47) umfasst,
- ein Objektiv (48), dessen optische Achse den Horizont durch Rotation der Dreheinheit (42) abtasten kann.

9. System nach Anspruch 8, bei dem der Sensor (10) eine Schutzscheibe (52) umfasst, die mit Hilfe eines Sauggebläses (53) belüftet wird, um das Objektiv (48) zu schützen.

10. System nach Anspruch 8 oder 9, bei dem Elektronikkarten (56) zur Bildbearbeitung mit der Dreheinheit (42) verbunden sind.

11. System nach einem der Ansprüche 8 bis 10, umfassend eine Vorrichtung (57) zum Messen der Winkelposition der Dreheinheit (42).

12. System nach einem der Ansprüche 8 bis 11, bei dem die digitalen Ausgangsdaten des optischen Sensors (10) über Drehkontakte (58) übertragen werden, die auch den Kontakt der Versorgung der Elemente der Dreheinheit (42) sicherstellen.

13. System nach einem der Ansprüche 1 bis 12, umfassend Schnittstellenmittel mit einem Kompass.

14. System nach einem der Ansprüche 1 bis 13, umfassend Schnittstellenmittel mit weiteren Sensoren und Analysemittel, die eine Kohärenzanalyse mit von den anderen Sensoren gelieferten Informationen durchführen.

15. System nach einem der Ansprüche 1 bis 14, umfassend Anzeigemittel (IHM), um anzuzeigen, dass ein gefährliches Objekt erfasst wurde.

16. System nach einem der Ansprüche 1 bis 15, bei dem die Informationen über die Position jedes sichtbaren Objekts einen Azimut des Objekts umfassen.

17. Kollisionswarnverfahren in einem Kollisionswarnsystem für ein Seefahrzeug (12), umfassend mindestens einen optischen Sensor (10), der mindestens teilweise den Horizont des Seefahrzeugs abdeckt, **dadurch gekennzeichnet, dass** es die folgenden Schritte umfasst, darin bestehend:
- vom optischen Sensor Bilder zu erhalten, die einen Teil des Horizonts des Seefahrzeugs einschließen,
- in Echtzeit in jedem erhaltenen Bild aneinander grenzende Pixelgruppen in Abhängigkeit von der Leuchtintensität jedes Pixels des Bildes zu suchen,
- in Echtzeit die Beständigkeit jeder Pixelgruppe in aufeinander folgenden Bildern zu bewerten,
- in Echtzeit Gruppen, die sichtbare Objekte auf der Oberfläche des Meeres bilden, in Abhängigkeit von ihrer Beständigkeit zu bestimmen,
- in Echtzeit Informationen über die Position und die Dimension mindestens eines der sichtbaren Objekte zu bestimmen,
- periodisch die Entwicklung der Informationen über die Position und die Dimension mindestens des sichtbaren Objekts zu berechnen,
- eine Gefahr einer Kollision des Seefahrzeugs mit dem sichtbaren Objekt in Abhängigkeit von der Entwicklung der Informationen über die Position und Dimension des sichtbaren Objekts zu bewerten, wobei ein sichtbares Objekt als gefährlich betrachtet wird, wenn eine Gefahr einer Kollision des Seefahrzeugs mit dem sichtbaren Objekt besteht.

18. Verfahren nach Anspruch 17, umfassend Schritte des Anzeigens der Informationen zu jedem gefährlichen Objekt und des Entsendens eines Warnsignals, sobald ein neues gefährliches Objekt erfasst wird.

19. Verfahren nach Anspruch 17 oder 18, bei dem die Suche von aneinander grenzenden Pixelgruppen in jedem Bild die folgenden Schritte umfasst, darin bestehend:
a) den verwendbaren Teil des vom optischen Sensor (10) gelieferten Bildes einzurahmen,
b) die durchschnittliche Leuchtintensität der Pixel auf mindestens einem verwendbaren Teil des Bildes zu messen,
c) jedes Pixel des verwendbaren Teils des Bildes mit der durchschnittlichen Leuchtintensität zu vergleichen und dem Pixel einen Binärwert in Abhängigkeit vom Ergebnis des Vergleichs zuzuteilen,
d) Pixel mit einem gegebenen Binärwert zu suchen, die aneinander grenzende Pixelgruppen bilden.

20. Verfahren nach Anspruch 19, bei dem das Einrahmen des verwendbaren Teils eine automatische Erfassung der Horizontlinie umfasst.

21. Verfahren nach einem der Ansprüche 17 bis 20, bei dem die Schritte der Bestimmung der Informationen über die Position und Dimension, der periodischen Berechnung der Entwicklung der Informationen über die Position und Dimension, und der Bewertung der Kollisionsgefahr für jedes Bild durchgeführt werden.
